# EUROPEAN PATENT SPECIFICATION

(11) **EP 0 339 742 B1**
(45) Date of publication and mention of the grant of the patent: **29.12.1993**
(21) Application number: 89201064.6
(22) Date of filing: 25.04.1989
(51) Int. Cl.: C23C 4/04, C08G 67/02, C08J 5/12

(54) **Process for coating a solid object with a polymeric material**
Verfahren zum Beschichten eines festen Substrates mit einem Polymermaterial
Procédé pour revêtir un objet solide avec un matériau polymère

(30) Priority: 25.04.1988 US 185577
(43) Date of publication of application: 02.11.1989
(73) Proprietor: SHELL INTERNATIONALE RESEARCH MAATSCHAPPIJ B.V., 2596 HR Den Haag (NL)
(72) Inventor: George, Eric Richard, Houston Texas 77077 (US)

(56) References cited:
- US-A- 4 046 728
- US-A- 4 604 306
- US-A- 4 632 309

## Description

The invention relates to a process for coating a solid object with a polymeric material by flame spraying.

Flame spraying is a technology mainly used for coating solid articles with a layer of metal, especially zinc or aluminium. Sometimes it is called metal spraying therefore. It comprises a process in which a molten substance, e.g. a metal, is propelled onto a substrate by spraying, for example by using a spray gun. The molten droplets cool and partially solidify during their journey from the spray gun to the substrate, so that they arrive in a viscous, half-solid state, and are flattened on impact. This provides a relatively porous layer on the substrate without creating an alloy therewith. There are three basic techniques:
1. spraying molten material from a melting cup, no longer in common use because of technical difficulties;
2. wire spraying, comprising melting a wire in a gas-oxygen flame, an electrical arc or a plasma torch, followed by spraying using air or another gas; and
3. powder spraying, in which the material is provided in powdery form to the flame, arc or torch and is subsequently sprayed.

In the latter technique the powder may also be supplied in a compressed form, that is as rods, so that the powder may be sprayed as a "wire". A special way of heating and propelling the powder in one combined step consists in the use of shock waves, in a so-called detonation gun.

Though flame spraying is mainly used with metals, it is known to flame spray polymeric materials such as polyethene, PVC and polyamide too, but, as noted in Winkler Prins Technische Encyclopedie, Volume 5, pages 72-73, Amsterdam (1978), this method is less attractive because surface burning of the polymer particles reduces their quality and because other coating methods, such as sintering in fluidized beds and electrostatic spraying, are convenient and do not deteriorate the material as much. On the other hand, it would be advantageous to dispose of a polymeric material wich can be flame sprayed with ease and without significant deterioration, as only the flame spraying method can be used with objects of unlimited size, and permits to apply layers of any thickness, and of variable thickness if desired.

It has now been found, that this object may be achieved by choosing a polyketone polymer powder of a specific viscosity and particle size, which is optionally admixed to a copolymer of ethylene and an alpha,-beta-ethylenically unsaturated carboxylic acid.

Accordingly, the invention relates to a process for coating a solid object with a polymeric material by flame spraying characterized in that a powder having a particle size of 0.15-0.85 mm comprising a linear alternating polymer of carbon monoxide and at least one ethylenically unsaturated compound, which linear alternating polymer has a limiting viscosity number of 0.5-1.8 (as measured at 60°C in m-cresol), is heated to substantially melt the powder, and is thereafter propelled onto the surface of the solid object.

The polyketone polymer which is employed in the process of the invention is a linear alternating polymer of carbon monoxide and at least one ethylenically unsaturated compound. Suitable ethylenically unsaturated compounds for use as precursors of the polyketone polymers have up to 20 carbon atoms inclusive, preferably up to 10 carbon atoms inclusive, and are aliphatic such as ethylene and other alpha-olefins including propylene, butylene, isobutylene, 1-hexene, 1-octene and 1-dodecene, or are arylaliphatic containing an aryl substituent on a carbon atom of an otherwise aliphatic molecule, particularly an aryl substituent on a carbon atom of the ethylenic unsaturation and may be substituted with functional groups such as carboxyl or acid amide groups. Illustrative of this latter class of ethylenically unsaturated hydrocarbons are styrene, m-methylstyrene, p-ethylstyrene and p-methylstyrene. Preferred polyketones are copolymers of carbon monoxide and ethylene or terpolymers of carbon monoxide, ethylene and a second hydrocarbon of at least 3 carbon atoms, particularly an alpha-olefin such as propylene.

The structure of the polyketone polymers is that of a linear alternating polymer of carbon monoxide and ethylenically unsaturated compound and contains substantially one molecule of carbon monoxide for each molecule of unsaturated compound. When terpolymers of carbon monoxide, ethylene and a second hydrocarbon are employed, there will be within the terpolymer at least two units incorporating a moiety of ethylene for each unit employing a moiety of the second hydrocarbon. Preferably there will be from 10 units to 100 units incorporating a moiety of ethylene per unit employing a molecule of the second hydrocarbon. The polymer chain may thus contain x units of the formula -CO(̵CH₂-CH₂)̵ and y units of the general formula -CO-(B)-, such that the -CO- moieties alternate with the (̵CH₂-CH₂)̵ and (̵B)̵ moieties, B being the moiety of the second hydrocarbon polymerized through the ethylenic unsaturation. The -CO(̵CH₂-CH₂)̵ units and the -CO(̵B)̵ units are found randomly throughout the polymer chain and the ratio of y:x is no more than 0.5. In the modification of the invention where copolymer of ethylene and carbon monoxide is employed, the polymer is illustrated by the above formula wherein y = 0. When y is other than 0, as in the case of terpolymers, ratios of y:x from 0.1 to 0.01 are preferred. The end groups or "caps" of the polymer chain will depend on what materials are present during the production of the polymer and whether and how the polymer is purified. The precise nature of the end groups is of little significance so far as the overall properties of the polymer are concerned, so that the polyketone polymer is fairly represented by the above formula. Of particular interest are the polymers of molecular weight from 1,000 to 200,000, particularly those polyketone polymers of molecular weight from 10,000 to 50,000. The physical properties of the polymers will depend in part on whether the polymer is a copolymer or a terpolymer and the relative proportion of second hydrocarbon present in the case of terpolymers. Typical melting points of such polymers are from 175°C to 300°C, but more typically from 210°C to 270°C.

A method of producing the polymers which is now becoming conventional is to contact the carbon monoxide and unsaturated compound(s) in the presence of a catalyst composition formed from a palladium compound, the anion of a non-hydrohalogenic acid having a pKa below 6 and a bidentate phosphorus ligand of defined structure. The scope of the process of producing the polyketone polymer is extensive, but without wishing to be limited, the preferred palladium compound is a palladium carboxylate, particularly palladium acetate, the preferred anion is the anion of trifluoroacetic acid or p-toluenesulphonic acid and the preferred bidentate phosphorus ligand is 1,3-bis(diphenylphosphino)propane or 1,3-bis[di(2-methoxyphenyl)phosphino]propane. Such a process for polyketone production is illustrated by inter alia European patent applications 121,965 and 181,014.

The flame spray process of the invention is usefully conducted employing the polyketone polymer without the addition of other materials. However, conventional additives such as pigments, antioxidants and stabilizers which are designed to improve the properties of the coated object may be incorporated within the polyketone polymer. In a particular embodiment, however, the polyketone is blended with a second polymeric component and the resulting blend is employed in the flame coating process. A preferred second polymeric material is a copolymer of ethylene and alpha,beta-ethylenically unsaturated carboxylic acid. Although a variety of such unsaturated carboxylic acids of up to 10 carbon atoms inclusive, or in some cases even more, is useful as a monomer in the ethylene copolymers, e.g., 2-hexenoic acid, 2-octenoic acid and 2-decenoic acid, the preferred ethylenically unsaturated acids are those of up to 4 carbon atoms inclusive which are acrylic acid, methacrylic acid and crotonic acid. Methacrylic acid and acrylic acid are particularly preferred components of the ethylene/unsaturated carboxylic acid copolymer.

The ethylene/unsaturated carboxylic acid copolymers are those copolymers having a relatively large proportion of ethylene and a relatively small proportion of the unsaturated carboxylic acid. Suitable ethylene copolymers have from 0.1% by weight to 35% by weight of unsaturated carboxylic acid, based on the total copolymer. Preferably, the copolymers have from 1% by weight to 20% by weight of the unsaturated carboxylic acid on the same basis.

The method by which the copolymers are prepared is not critical and ethylene/unsaturated acid copolymers produced by a variety of methods are usefully employed when polyketone blends are used in the flame spraying process. A number of ethylene/acrylic acid and ethylene/methacrylic acid copolymers are commercially available. A general discussion of the production of ethylene/unsaturated carboxylic acid copolymers is found in US-3,520,861 and US-4,351,931.

Blends containing up to about 80% by weight, based on total blend, of the ethylene/unsaturated carboxylic acid copolymer may be prepared, however, blends of up to 35% by weight may be flame-sprayed in a satisfactory manner. Blends containing from 0.1% to 10% by weight of ethylene/unsaturated carboxylic acid copolymer, based on total blend, are preferred and particularly preferred, when blends are to be employed, are polyketone blends containing from 3% to 7% by weight, on the same basis, of the ethylene/unsaturated carboxylic acid copolymer.

The method of forming a blend to be used in the process of the invention, when blends are employed, is not material so long as a uniform blend of the components is produced without undue degradation of the components or the resulting blend. In one embodiment the polyketone polymer and the ethylene/unsaturated carboxylic acid copolymer are co-extruded to produce the blend as an extrudate. In another embodiment, the components are dry blended as powders or blended in a mixing device which exhibits high shear. The polyketone blend with ethylene/unsaturated carboxylic acid copolymer is a non-miscible blend wherein the ethylene/unsaturated acid copolymer exists as a discrete phase in the polyketone matrix. Satisfactory phase size for use in the invention is in the order of 0.2 to 1.5 µm, preferably from 0.5 to 1.0 µm. The blend is, of course, not homogeneous but good results are obtained in the process of the invention when the blend is a uniform mixture of the dispersed ethylene/unsaturated carboxylic acid copolymer in the continuous polyketone phase.

The blends used in the process of the invention may optionally contain other conventional additives such as antioxidants, stabilizers and fire retardant materials and other additives designed to improve the processability of the polymers or improve the properties of the resulting blend. Such additives are added by conventional methods prior to, together with or subsequent to the blending of the component polymers.

A suitable device for flame spraying the present thermoplastic polymeric materials is an apparatus wherein the polymeric material, a fuel and oxygen-containing gas are introduced into a combustion chamber wherein the fuel and oxygen-containing gas mixture ignites, thereby giving off heat which serves to substantially melt the polymeric material. The molten polymeric material is thereafter propelled from the combustion chamber by a source of propelling gas onto the surface of the object to be coated.

Illustrative fuels are generally low-molecular weight hydrocarbons which ignite easily and are normally gaseous at ambient conditions. Examples of suitable fuels include propane, propylene, ethylene and acetylene. Propane is convenient. As the oxygen-containing gas employed to cause combustion of the fuel, a variety of mixtures of oxygen and other non-combustible gases are usefully employed. Air is preferred. A variety of gaseous materials is useful as the propelling gas including nitrogen, argon and helium. Largely for convenience and economy, the use of air as the propelling gas as well as the combustion gas is preferred. Examples of such flame spraying processes and apparatus therefor are known in the art. A particularly useful process and equipment for use in the process is described in US-4,632,309. Other related processes are illustrated by US-4,604,306, US-3,723,165 and US-3,440,079.

The state of division of the polymeric material powder as well as the viscosity of the polyketone polymer, is important in obtaining good coatings on the target object. The polymeric material to be flame sprayed should be of a size from 0.15 to 0.85 mm (20-100 mesh), preferably from 0.18 to 0.30 mm (50-80 mesh). The limiting viscosity number of the polyketone polymer (LVN, measured at 60°C in m-cresol) should be from 0.5 to 1.8 and preferably is below 1.4.

The object to be coated is a solid object for which a tough, wear and corrosion resistant coating is desired and objects of metal, glass, ceramic, plastic or other material are coated by the present process. More frequently, the process is employed to provide a coating of polyketone or blend thereof on metal objects. The process of the invention may be used in conjunction with other polymeric coatings wherein the object to be coated has a base coat of a first polymeric composition, such as a polyolefin, and a subsequent top coat of polyketone or polyketone blend. Alternatively, the coating comprising polyketone may be used to provide a base coat suitable for subsequent top coating with a second composition. The process is particularly suitable for coating both internal and external automotive parts such as drive shafts and suspension springs and for coating storage tanks, food processing equipment and industrial pipe.

The invention is further illustrated by the following Examples.

### Example I

A. A linear alternating copolymer of carbon monoxide and ethylene was produced by contacting the carbon monoxide and ethylene in the presence of a catalyst composition formed from palladium acetate, the anion of trifluoroacetic acid and 1,3-bis[di(2-methoxyphenyl)phosphino)propane. The copolymer had a melting point of 250°C and a LVN (measured at 60°C in m-cresol) of 1.3.
   Three linear alternating terpolymers of carbon monoxide, ethylene and propylene were separately produced in the presence of catalyst compositions formed from palladium accetate, the anion of trifluoroacetic acid and 1,3-bis(di(2-methoxyphenyl)phosphino)propane. The terpolymers each had a melting point of 220°C and LVN (measured at 60°C in m-cresol) of 1.2, 1.6 and 2.2, respectively.
B. The terpolymers of paragraph A were separately employed in a flame spraying process to coat metal plates of aluminium and steel approximately 7.5 by 17.5 cm with a thickness of 1.6 mm. The terpolymers were used as powders of roughly 0.18 to 0.30 mm (50 to 80) mesh and the powders were dried prior to use.
   The metal plates were flame dried and then coated by flame spraying for approximately four minutes each until a film coating thickness of 0.76 mm was achieved on each plate. The bond of the polymer coating to the metal plates was tested in ASTM Crosshatch Adhesion Test #D3359-78. In this standardized test procedure, a six-blade cutting apparatus is first used to score and crosshatch the polymer coating down to the metal surface. A special ASTM adhesive tape is applied to the top surface of the coating and subsequently pulled from the surface at an acute angle to test the adhesion of the coating to the metal substrate. The adhesion of the coating is rated from 1 to 5 according to the number of crosshatch squares that are removed by the tape, 5 being the highest rating. The coatings prepared with the terpolymers of Example I were all rated 5.

### Example II

The copolymer of Example I, paragraph A was blended separately with 30% by weight, based on total blend, of two commercially available ethylene-acrylic acid copolymers. The first one was a copolymer of ethylene and 9.5% by weight based on copolymer of acrylic acid. The second one was a copolymer of ethylene and 20% by weight based on copolymer of acrylic acid. The blend of the latter copolymer also contained carbon black as a colourizing agent.

The blends were employed in a flame spraying process as in Example IB to coat aluminium and steel plates. The coatings were tested after they were prepared in ASTM Crosshatch Adhesion Test #D3359-78, as in Example 1B. All of the coatings were rated 5.

### Example III

The terpolymer of Example 1A having an LVN of 2.2 was blended separately with 20, 40, 60 and 80% by weight, based on total blend, of the first ethylene-acrylic acid copolymer of Example II. The blend was employed in a flame spraying process to coat metal plates as in Example IB and the coatings were tested in the ASTM Crosshatch Adhesion Test described before. The coatings were all rated 5.

The coated plates were tested for Gardner Impact strength with a 900 g weight and all of the coatings were rated at over 90 kg.cm. In several cases, the metal plates cracked during testing, but not the polymeric coatings.

## Claims

1. Process for coating a solid object with a polymeric material by flame spraying characterized in that a powder having a particle size of 0.15-0.85 mm comprising a linear alternating polymer of carbon monoxide and at least one ethylenically unsaturated compound, which linear alternating polymer has a limiting viscosity number of 0.5-1.8 (as measured at 60°C in m-cresol), is heated to substantially melt the powder, and is thereafter propelled onto the surface of the solid object.

2. A process as claimed in claim 1, wherein the linear alternating polymer contains x units of the formula -CO(̵CH₂-CH₂)̵ and y units of the general formula -CO-(B)-, such that the -CO- moieties alternate with the (̵CH₂-CH₂)̵ and (̵B)̵ moieties, B being the moiety of an ethylenically unsaturated hydrocarbon of at least 3 carbon atoms and the ratio of y:x being no more than 0.5.

3. A process as claimed in claim 1 or 2, wherein the polymeric material comprises in addition up to 35% by weight (based on the total) of a copolymer of ethylene and an alpha,beta-ethylenically unsaturated carboxylic acid, the latter being present in an amount of from 0.1% to 35% by weight of copolymer.

4. A process as claimed in claim 3, wherein the copolymer is a copolymer of ethylene and an alpha,beta-ethylenically unsaturated carboxylic acid of up to 4 carbon atoms inclusive, the latter being present in an amount of from 1% to 20% by weight of copolymer.

5. A process as claimed in claim 4, wherein the copolymer is a copolymer of ethylene and acrylic acid.

6. A process as claimed in any of claims 3-5, wherein the quantity of copolymer of ethylene and the alpha,beta-ethylenically unsaturated carboxylic acid is from 3 to 7% by weight based on total blend.

7. A process as claimed in any of claims 2-6, wherein y = 0.

8. A process as claimed in any of claims 2-6, wherein B is a moiety of propylene and the ratio of y:x is from 0.01 to 0.1.

## Patentansprüche

1. Verfahren zum Beschichten eines festen Gegenstandes mit einem polymeren Material mittels der Flammspritztechnik, dadurch gekennzeichnet, daß ein Pulver mit einer Teilchengröße von 0,15 - 0,85 mm, welches ein lineares, alternierend strukturiertes Polymer aus Kohlenmonoxyd und mindestens einer ethylenisch ungesättigten Verbindung umfaßt, wobei besagtes lineare, alternierend strukturierte Polymer eine Grenzviskositätszahl (bestimmt bei 60°C in m-Cresol) von 0,5 - 1,8 aufweist, erhitzt wird, bis das Pulver praktisch geschmolzen ist, und daß es anschließend auf die Oberfläche des festen Gegenstandes geschleudert wird.

2. Ein Verfahren, wie in Anspruch 1 beansprucht, in welchem das lineare, alternierend strukturierte Polymer x Einheiten der Formel -CO(̵CH₂-CH₂)̵ und y Einheiten der allgemeinen Formel -CO(̵B)̵ derart enthält, daß die CO-Molekülteile mit den Molekülteilen (̵CH₂-CH_{2)̵} sowie den (̵B)̵Molekülteilen abwechseln, wobei B der Molekülteil eines ethylenisch ungesättigten Kohlenwasserstoffes mit mindestens 3 Kohlenstoffatomen ist und das Verhältnis y:x einen Wert von nicht mehr als 0,5 hat.

3. Ein Verfahren, wie in Anspruch 1 oder 2 beansprucht, in welchem das polymere Material zusätzlich bis zu 35 Gew.% (bezogen auf das Gesamtgemisch) eines Copolymeren aus Ethylen und einer alpha,beta-ungesättigten Carbonsäure enthält, wobei letztere in einer Menge von 0,1 bis 35 Gew.%, bezogen auf das Copolymer, vorliegt.

4. Ein Verfahren, wie in Anspruch 3 beansprucht, in welchem das Copolymer ein Copolymer aus Ethylen und einer alpha,beta-ungesättigten Carbonsäure mit bis einschließlich 4 Kohlenstoffatomen ist, wobei letztere in einer Menge von 1 bis 20 Gew.%, bezogen auf das Copolymer, vorliegt.

5. Ein Verfahren, wie in Anspruch 4 beansprucht, in welchem das Copolymer ein Copolymer von Ethylen und Acrylsäure ist.

6. Ein Verfahren, wie in irgendeinem der Ansprüche 3 bis 5 beansprucht, in welchem die Menge an Copolymer aus Ethylen und der alpha,beta-ungesättigten Carbonsäure 3 bis 7 Gew.%, bezogen auf die Gesamtmischung, beträgt.

7. Ein Verfahren, wie in irgendeinem der Ansprüche 2 bis 6 beansprucht, in welchem y den Wert 0 hat.

8. Ein Verfahren, wie in irgendeinem der Ansprüche 2 bis 6 beansprucht, in welchem B ein von Propylen abgeleiteter Molekülteil ist und das Verhältnis y:x einen Wert im Bereich von 0,01 bis 0,1 hat.

## Revendications

1. Procédé pour revêtir un objet solide avec une matière polymère par pulvérisation à la flamme, caractérisé en ce qu'une poudre ayant une grosseur de particules de 0,15-0,85 mm comprenant un polymère alterné linéaire d'oxyde de carbone et d'au moins un composé éthyléniquement insaturé, ce polymère alterné linéaire ayant un indice limite de viscosité de 0,5-1,8 (tel que mesuré à 60°C dans le m-crésol), est chauffée de façon que la poudre fonde substantiellement, et est ensuite projetée sur la surface de l'objet solide.

2. Un procédé selon la revendication 1, dans lequel le polymère alterné linéaire contient x mailles de la formule -CO(̵CH₂-CH₂)̵ et y mailles de la formule générale -CO-(B)- de manière que les portions -CO- alternent avec les portions (̵CH₂-CH₂)̵ et (̵B)̵, B étant la portion d'un hydrocarbure éthyléniquement insaturé d'au moins 3 atomes de carbone et le rapport y:x n'étant pas supérieur à 0,5.

3. Un procédé selon la revendication 1 ou 2, dans lequel la matière polymère comprend en outre jusqu'à 33 % en poids (par rapport au total) d'un copolymère d'éthylène et d'un acide carboxylique éthyléniquement insaturé en alpha,bêta, ce dernier étant présent à raison de 0,1 % à 35 % en poids du copolymère.

4. Un procédé selon la revendication 3, dans lequel le copolymère est un copolymère d'éthylène et d'un acide carboxylique éthyléniquement insaturé en alpha,bêta ayant jusqu'à 4 atomes de carbone inclusivement, ce dernier étant présent à raison de 1 % à 20 % en poids du copolymère.

5. Un procédé selon la revendication 4, dans lequel le copolymère est un copolymère d'éthylène et d'acide acrylique.

6. Un procédé selon l'une quelconque des revendications 3-5, dans lequel la quantité de copolymère d'éthylène et de l'acide carboxylique éthyléniquement insaturé en alpha,bêta est comprise entre 3 et 7 % en poids, par rapport au mélange total.

7. Un procédé selon l'une quelconque des revendications 2-6, dans lequel y = 0.

8. Un procédé selon l'une quelconque des revendications 2-6, dans lequel B est une portion de propylène et le rapport y:x est compris entre 0,01 et 0,1.
